(19) Europäisches Patentamt European Patent Office Office européen des brevets

(11) **EP 4 571 562 A1**

(12) **EUROPEAN PATENT APPLICATION**

(43) Date of publication:
**18.06.2025  Bulletin 2025/25**

(21) Application number: **23216402.0**

(22) Date of filing: **13.12.2023**

(51) International Patent Classification (IPC):
**G06F 30/17** (2020.01)   **G06F 30/28** (2020.01)
**G06F 111/04** (2020.01)   **G06F 111/10** (2020.01)
**G06F 113/08** (2020.01)   **G06F 119/08** (2020.01)

(52) Cooperative Patent Classification (CPC):
**G06F 30/28; G06F 30/17;** G06F 2111/04;
G06F 2111/10; G06F 2113/08; G06F 2119/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **VITO NV**
  **2400 Mol (BE)**
• **Technische Universiteit Delft**
  **2628 CN Delft (NL)**

(72) Inventors:
• **PAI RAIKAR, Praharsh Pravin**
  **2400 Mol (BE)**
• **ANAND, Nitish**
  **2400 Mol (BE)**
• **DE SERVI, Carlo**
  **2400 Mol (BE)**
• **PINI, Matteo**
  **2628 CN Delft (NL)**

(74) Representative: **V.O.**
**P.O. Box 87930**
**2508 DH Den Haag (NL)**

(54) **A COMPUTER-IMPLEMENTED METHOD FOR SYSTEMATIC DESIGN CONFIGURATION, ASSESSMENT AND OPTIMIZATION OF A THERMAL TRANSFER DEVICE**

(57)    A computer-implemented method for systematic configuration, assessment and optimization of a thermal transfer device comprising a plurality of thermal transfer elements arranged in a structured way, wherein each thermal transfer element extends along an axial path, the method including the steps of: starting with an initial geometric design of the plurality of thermal transfer elements; using an optimization framework with a computational model for performing computerized simulations of fluid dynamics and heat transfer at least around said thermal transfer elements during intended operation of the thermal transfer device, in order to perform geometric design optimization of each thermal transfer element based on an optimization algorithm targeting predetermined criteria, wherein the optimization framework is configured to iteratively refine the geometric design of each individual thermal transfer element; and wherein the geometric design of multiple thermal transfer elements are allowed to be varied independently of each other during optimization.

FIG 1A

FIG 1B

EP 4 571 562 A1

**Description**

FIELD OF THE INVENTION

The invention relates to a computer-implemented method for systematic configuration, assessment and optimization of a thermal transfer device to provide optimized design comprising a plurality of thermal transfer elements arranged in a structured way. Furthermore, the invention relates to a computing system for designing a thermal transfer device. Also, the invention relates to a non-transitory, computer readable medium comprising code configured to direct a processor to perform the steps of the computer-implemented method according to the disclosure. Additionally, the invention relates to a computer program product.

BACKGROUND TO THE INVENTION

The optimization of thermal transfer devices such as heat exchangers is often challenging. One of the primary concerns in this field is the high computational cost associated with optimization processes and high complexity of models. In some cases, models employed in the design and optimization of these devices are oversimplified to reduce computational overhead. This simplification often leads to suboptimal designs that do not harness the full potential of the device.
A prevalent approach in the design of thermal transfer devices involves optimizing a singular shape of a tube or fin, which is then replicated across the entire design. Such a method does not take into consideration the unique requirements and constraints of individual components within the larger system, thus often leading to inefficiencies in the final design.
Topology optimization, another method that has gained traction in recent years, focuses on the strategic addition or removal of material to achieve optimal designs. While this approach holds promise, it is not without its pitfalls. The computational demands of topology optimization are significantly high, especially when modeling complex flow patterns such as turbulence. Furthermore, traditional topology optimization techniques are usually defined in terms of volume, distinguishing between solid or fluid volume elements. This volume-based approach makes it nearly impossible to model turbulence accurately. Turbulence, by its nature, demands a precise definition in terms of walls or surfaces, not merely volumes. As a result, existing methods may only provide approximations of turbulent flows, compromising the accuracy and efficiency of the designs.
A promising alternative to the aforementioned topology optimization method is shape optimization. Unlike topology optimization, shape optimization focuses on varying the surface, such as the shape of a tube or fin, rather than adding or removing material. This approach is not only computationally more efficient but also offers enhanced precision for fluid simulations, thanks to the utilization of pre-defined surfaces. A significant advantage of using shape optimization is due to a definitive definition of the walls, the effect of turbulence is well captured during shape optimization. However, it often leads to a vast design space. There is a need for an approach that can improve the efficiency of the shape design optimization of thermal transfer devices, in order to meet the ever-evolving demands of the industry.

SUMMARY OF THE INVENTION

It is an object of the invention to provide for a method and a system that obviates at least one of the above mentioned drawbacks.
Additionally or alternatively, it is an object of the invention to provide for a computer implemented method and system that enables a more efficient systematic configuration, assessment and optimization of a thermal transfer device.
Additionally or alternatively, it is an object of the invention to provide for a computer implemented method and system that improves the design process of a thermal transfer device.
Additionally or alternatively, it is an object of the invention to provide for a computer implemented method and system that efficiently facilitates systematic and iterative design optimization of thermal transfer elements using computational simulations of fluid dynamics and heat transfer.
Thereto, the invention provides for a computer-implemented method for systematic configuration, assessment and optimization of a thermal transfer device comprising a plurality of thermal transfer elements arranged in a structured way, wherein each thermal transfer element extends along an axial path, the method including the steps of: starting with an initial geometric design of the plurality of thermal transfer elements; using an optimization framework with a computational model for performing computerized simulations of fluid dynamics and heat transfer at least around said thermal transfer elements during intended operation of the thermal transfer device, in order to perform geometric design optimization of each thermal transfer element based on an optimization algorithm targeting predetermined criteria, wherein the optimization framework is configured to iteratively refine the geometric design of each individual thermal transfer element; and wherein the geometric design of multiple thermal transfer elements are allowed to be varied independently of each other during optimization.

The method initiates with a predefined geometric design of these elements. An optimization framework, combined with a computational model, is employed to execute computerized simulations of fluid dynamics and heat transfer specifically around these thermal transfer elements during the device's operation. The intent is to optimize the geometric design of each element, governed by an optimization algorithm that aims at certain predetermined criteria. The framework is designed to iteratively refine each element's geometric design. The geometric design of various thermal transfer elements can be modified independently throughout the optimization process.

Advantageously, a very rich design space can be explored for the heat transfer device, whilst providing for an efficient optimization. Improved design flexibility enables designing tailor made heat exchangers in an efficient way.

A tailored design of the thermal transfer device for optimized performance can be obtained. A tailored design implies that the thermal transfer device is custom-made or specifically designed to cater to these unique requirements. By ensuring each component of the device is accurately fashioned to function optimally under specific conditions, the overall efficiency and effectiveness of the device are enhanced.

The utilization of the optimization framework with a computational model, implies the integration of computational tools and algorithms to refine the design process. An optimization framework is a structured system that uses mathematical models/algorithms to find the best possible design solution based on set criteria. In this context, the criteria can be defined as for example achieving maximum heat transfer efficiency and/or optimal fluid dynamics.

The inclusion of computational models in the process means that the framework doesn't just rely on trial and error or empirical data. Instead, it uses mathematical and physics-based models to simulate how the device would perform under various conditions. These models can simulate fluid flow (cf. computational fluid dynamics) and how heat is transferred between materials (computational heat transfer) around the thermal transfer elements. By utilizing these models, it becomes possible to predict how slight alterations in the design might impact performance, allowing to make informed decisions about which design variations will yield the best results.

The process is iterative, meaning the design is continuously refined. The optimization framework, using the computational models, will make adjustments to the design, test the results in a virtual environment (cf. computation), analyze the outcomes, and then make further refinements. This cycle can continue until the improved design meets or surpasses the predetermined operation criteria.

In some examples, the computer-implemented method may include the configuration and evaluation of a heat sink or heat exchanger having numerous fins or heat pipes, wherein each fin or pipe has an elongated shape. The process commences with a primary design of these fins or pipes. An optimization tool, that employs a simulation model for fluid dynamics and thermal transfer, refines the design of each fin or pipe. This model targets certain criteria, and the tool refines each fin or pipe's design. The design of each fin or pipe can be adjusted independently during this optimization.

Optionally, data representative of the optimized geometric design of each thermal transfer element is outputted.

Optionally, data representative of the optimized geometric design is transferred to production equipment configured for producing the thermal transfer device.

Optionally, the production equipment comprises an additive manufacturing system.

Optionally, an additive manufacturing system is employed that is configured for fabricating at least parts of the optimized thermal transfer device based on the optimized design parameters.

Optionally, an output signal representative of the optimized geometric design is transferred to production equipment configured for producing an optimized physical object according to the output signal.

Optionally, the physical object is the thermal transfer device or a part of it.

It will be appreciated that the term "physical object" refers to any tangible item that can be produced based on the optimized geometric design derived from the computer-implemented method. The thermal transfer device may be the primary product that the method is designed to optimize. The thermal transfer device can be seen as an assembly comprising multiple thermal transfer elements. The optimized design may aim to improve aspects like efficiency, effectiveness, and/or manufacturability of this device.

It will be appreciated that instead of producing the entire thermal transfer device, the optimized design may be used to manufacture only certain parts or components of it. For example, if the thermal transfer device is made up of several different types of elements, the method might optimize the design of one specific type of element, and only that element might be produced based on the optimized design.

Optionally, each thermal heat transfer element is parameterized along a line in a cross-sectional view perpendicular to its axial path, wherein, during iterative optimization, the optimization framework is configured to adjust a thickness distribution of each heat transfer element along said line to derive an overall shape of each thermal transfer element, and wherein a plurality of nodes are defined along a length of each thermal transfer element, and wherein the thickness distribution of the thermal transfer element is determined by a distance from each of these plurality of nodes to the line of said respective thermal transfer element.

Each thermal heat transfer element can be parameterized along a line observed in a cross-sectional view, which is perpendicular to its axial path. The optimization framework, during its iterative optimization, is technically set to adjust the thickness distribution of each heat transfer element along this specified line. This adjustment is important in deriving the overarching shape of each thermal transfer element. Furthermore, multiple nodes are defined along the length of each element. The thickness distribution of the element is determined by measuring the distance from each of these nodes to the line of the associated thermal transfer element.

Throughout the iterative optimization process, the framework adjusts the thickness distribution of each heat transfer element along the aforementioned line, thus deriving its overall shape. This process involves several nodes defined along the length of each thermal transfer element. The thickness distribution is then determined by the distance from each of these nodes to the respective element's line. Advantageously, a granular and precise control over the shape and thickness of the thermal transfer elements is provided. The methodology ensures for an efficient way to adapt the design optimally to the unique needs and constraints of the specific application. The computational cost of the optimization process can be significantly reduced compared to methods known in the art.

The design process for the thermal transfer elements is refined by introducing an improved parameterization method. Parameterization refers to the process of defining certain variables or parameters that can be adjusted to influence the outcome. In this case, each thermal transfer element's design is parameterized by defining it along a line in a cross-sectional view. This cross-sectional view is taken perpendicular to the axial path of the thermal transfer element. Essentially, if you imagine the thermal transfer element as a long rod, the cross-sectional view would be a cut across this rod, giving a view of its cross-section.

It will be appreciated that iterative can be understood as repetitive, indicating that the optimization process undergoes multiple cycles of refinement. During each cycle, the thickness distribution of the thermal transfer element along the defined line (from the cross-sectional view) is adjusted. This adjustment isn't arbitrary. Instead, it's done with the goal of optimizing the element's shape for heat transfer.

The nodes are specific points defined along the length of each thermal transfer element. They can be understood as markers or reference points. The thickness of the thermal transfer element at any given location is determined by the distance from these nodes to the element's defined line in the cross-sectional view. By adjusting the position of these nodes, the thickness and shape of the thermal transfer element can be precisely controlled.

The introduction of this parameterization technique, combined with iterative optimization and the use of nodes, offers an advantageous way for fine-tuning the design of each thermal transfer element with great precision. This granular control ensures that each element's shape and thickness can be adjusted to meet specific requirements.

Different applications or operating conditions may have unique challenges or constraints. For example, certain applications may require faster heat dissipation, while others may prioritize minimizing material usage. By having precise control over the design of each thermal transfer element, it can be better ensured the device is optimized for its intended purpose.

In some examples, each fin or heat pipe may be described along a curve in a view perpendicular to its elongation. During the iterative refinement, the optimization tool can modify the thickness or width distribution of each fin or pipe based on this curve to determine the overall shape. Multiple reference points or nodes may be situated along each fin or pipe. The thickness or width can be gauged by the distance from each of these nodes to the described curve. In alternative examples, the curve can be a straight line or a curved path.

Optionally, the line is chosen to be substantially parallel to a general flow direction between an inlet and outlet of the thermal transfer device in between which the plurality of thermal transfer elements are arranged.

In some examples, the chosen line can be substantially parallel to a general flow direction that connects the inlet and outlet of the thermal transfer device. The thermal transfer elements can be systematically arranged between this inlet and outlet.

This arrangement of the line ensures that the thermal transfer elements are situated effectively in relation to the flow. This can improve the optimization process by reducing the calculation times. By aligning the elements with the direction of fluid flow an improved heat transfer can be obtained. This alignment ensures that the fluid comes into optimal contact with the elements, promoting efficient heat exchange.

In the design of this fluid-based system, the direction of fluid flow is important. The line used for parameterizing the thermal transfer elements can be aligned to be substantially parallel to the general flow direction between the device's inlet (where fluid enters) and outlet (where fluid exits), in order to ensure that the thermal transfer elements are oriented in a manner that complements the natural trajectory of the fluid.

The alignment ensures that the thermal transfer elements are positioned effectively in relation to the flow. The contact between the thermal transfer elements and the fluid can be more effective than if the elements were oriented in a manner without such alignment. This strategic alignment results in enhancement of heat transfer efficiency. When the thermal transfer elements are aligned with the fluid flow direction, it maximizes the surface area of the element that comes into direct contact with the fluid. As heat transfer is fundamentally influenced by the surface area in contact, this alignment ensures that heat is exchanged more efficiently between the fluid and the thermal transfer elements. In this way, the optimization process can be significantly improved, and thus the computational costs can be reduced.

Beyond just the alignment, the orientation ensures that the fluid better envelops the elements. This envelopment promotes a more intimate and prolonged contact between the fluid and the elements. The longer and closer the fluid is in contact with the thermal transfer elements, the more heat can be effectively transferred.

In some examples, the curve or line may be aligned nearly parallel to the general flow direction from an entry point to an exit point of the heat sink or exchanger, within which the fins or pipes are positioned. In other examples, the curve or line can be oriented at a slight angle relative to the flow direction or may follow a unique, predefined path.

In some examples, the initial geometry or cross-sectional profile of the heat exchange element can be substantially circular. The term "circular" in this context denotes a shape or configuration wherein all points on the perimeter or boundary of the heat exchange element are equidistant from a central point or axis, resulting in a symmetrical and continuous curve without any corners or edges.

Such a circular configuration of the heat exchange element may offer various advantages, including but not limited to, efficient heat transfer due to increased surface area and good structural integrity. The circular design may also facilitate uniform distribution of thermal stresses, reducing potential points of mechanical failure and ensuring consistent performance across the heat exchange element.

It is to be understood that while the present disclosure, as discussed for the above example, emphasizes a circular configuration as the initial geometry or cross-sectional profile of the heat exchange element, the invention is not limited thereto, and other initial geometric configurations, whether symmetrical or asymmetrical, may also be contemplated within the scope of the invention.

Optionally, the initial geometric design in cross-section has a droplet shape.

In some examples, the initial geometric design, when observed in cross-section, predominantly exhibits a droplet shape. This shape can form the foundational design before any optimization occurs. A droplet shape, by its very nature, promotes smooth flow around it, reducing resistance. This leads to improved efficiency and performance of the thermal transfer device by minimizing potential flow disruptions and maximizing the surface area in contact with the fluid. Therefore, the optimization process can be significantly improved by using such shape as the initial geometric design.

A droplet shape typically is rounded at the top (typically at the leading edge side) and tapers smoothly to a point or a narrower base (typically at the trailing edge). The droplet shape's inherent aerodynamic properties provide it with technical advantages when interacting with flowing fluids. As fluid encounters the droplet-shaped thermal transfer elements, it flows smoothly around the rounded contours of the droplet shape. Another advantage of the droplet shape is the maximization of the surface area that comes into contact with the fluid. The rounded and elongated nature of the droplet ensures that a larger portion of the element's surface is exposed to the fluid compared to other potential shapes. In heat transfer, the amount of surface area in contact with the fluid directly influences the efficiency of heat exchange. A larger contact surface area allows for more heat to be exchanged between the fluid and the thermal transfer element.

Advantageously, the number of iterations needed to reach the optimum can be significantly reduced by starting with the droplet shape as the initial geometry. The smooth fluid flow, increased contact surface area results in a thermal transfer device that operates with heightened efficiency and performance.

In some examples, the starting geometric design in a cross-sectional view may resemble a teardrop shape. Alternatively, the initial shape may mirror other geometries such as an ellipse, a semi-circle, or a complex contour tailored for specific applications.

Optionally, a first subset of the thermal transfer elements, including at least one or more leading thermal transfer elements and one or more trailing thermal transfer elements arranged within the device, is selected, wherein, during optimization, the thermal transfer elements in the first subset are allowed to independently exhibit a distinct geometric design, and wherein a second subset of the thermal transfer elements is selected, wherein, during optimization, the thermal transfer elements in the second subset are constrained such that they are not allowed to change independently in their geometric design.

A specific subset of the thermal transfer elements, which includes leading and trailing thermal transfer elements situated within the device, is chosen. During the optimization phase, the elements in this first subset have the liberty to exhibit distinct geometric designs independently. Concurrently, a second subset of the thermal transfer elements is identified. Notably, the elements in this second subset face constraints, disallowing them from independent geometric design alterations.

The advantage of this selective design approach is the preservation of critical flow dynamics around key elements while allowing flexibility in others. By controlling the design of leading and trailing elements, the invention ensures that the initial and final stages of heat transfer are optimal, while other elements therebetween can be varied similarly for overall device efficiency. Often, the design of the elements therebetween don't vary a lot from each other if they were allowed to be reshaped individually during the optimization process.

In this approach, the design optimization of the thermal transfer elements is performed by segregating them into distinct subsets based on their positioning and/or role within the device. The first subset comprises the "leading" and "trailing" elements. The terminology here is indicative of their position. "Leading" elements are those that the fluid first encounters as it enters the space in which the elements are arranged, while "trailing" elements are those that the fluid interacts with last before exiting said space. During the optimization process, this first subset of elements is allowed design flexibility, meaning they can have distinct geometric designs. This is significant because it means that the leading and trailing elements can be individually tailored to address specific fluid dynamics and heat transfer challenges at the start and end of the fluid's journey through the device. In contrast to the first subset, there's another group of thermal transfer elements that are not granted the same design autonomy. These elements, which make up the second subset, are restricted from undergoing independent geometric design changes during optimization. This suggests that while the leading and trailing elements can be individually optimized, the elements in between have some constraints to maintain uniformity or a specific design standard.

This bifurcated design strategy offers a blend of flexibility and consistency. By allowing the leading and trailing elements to have distinct designs, the device can ensure that the fluid's entry into and exit from the device is optimized. These stages are crucial because any turbulence or inefficiency at the start can cascade through the entire device, and any inefficiency at the end can diminish the overall heat transfer efficacy. While the leading and trailing elements are tailored for specific flow dynamics, the other elements in the device (the second subset) maintain a level of consistency. This strikes a balance between customization and uniformity, ensuring that while certain elements can adapt to specific challenges, the overall device maintains a consistent performance profile.

Thus, by differentiating the design approach for leading, trailing, and intermediate thermal transfer elements, the invention ensures a harmonious interplay between individual element performance and overall device efficiency. The ability to tailor specific elements while maintaining consistency in others ensures that the device can address unique fluid dynamics challenges while preserving optimal heat transfer throughout.

In some examples, a primary group of the fins or pipes, which may consist of one or more front fins or pipes and one or more rear fins or pipes within the device, can be chosen. During refinement, these fins or pipes in the primary group may independently adopt a unique design. A secondary group of the fins or pipes may be restricted from independent geometric changes during this refinement. In other examples, multiple subsets can be selected for differentiated optimization constraints.

Optionally, the second set includes thermal transfer elements positioned between one or more leading thermal transfer elements and one or more trailing thermal transfer elements in the thermal transfer device.

This second subset may include thermal transfer elements that are positioned between the leading and trailing thermal transfer elements within the device. The second subset specifically comprises thermal transfer elements positioned between the leading and trailing thermal transfer elements within the device. This positioning ensures that the core of the device maintains a consistent flow dynamic, while the periphery (leading and trailing elements) can be customized for specific needs. A balance between design flexibility and maintaining a consistent core design can be obtained.

In some examples, during optimization, a distinction is made between elements at the periphery and the core. The periphery consists of the leading and trailing elements, which, have the privilege of design flexibility. In contrast, the core, represented by the second subset, is where a consistent design is sought. This can also result in a consistent flow dynamics within said core. In this way, the modeling can be significantly simplified, and thus the computational cost reduced.

The elements positioned in the core play a crucial role in maintaining a steady, consistent flow dynamic through the bulk of the device. This consistent flow is vital for ensuring that the fluid's interaction with the thermal transfer elements remains stable and predictable as it moves through the central portion of the device. Such consistency aids in achieving uniform heat transfer rates and minimizes the chances of erratic flow patterns that can diminish efficiency.

While the core elements are designed for consistency, the leading and trailing elements at the periphery are granted design flexibility. This flexibility ensures that these elements can be optimized for the unique challenges posed at the entry and exit points of the fluid's travel through the device. For instance, the leading elements may be designed to ensure a smooth entry, while the trailing elements may be tailored to maximize heat extraction before the fluid exits.

On one hand, there's design flexibility in the periphery, allowing the device to adapt to specific operational needs or challenges. On the other, there's the consistent performance of the core, ensuring that once the fluid has been efficiently introduced into the device, it experiences a steady and predictable flow dynamic, conducive to efficient heat transfer.

In some examples, this secondary group may consist of fins or pipes positioned between the front and rear fins or pipes in the device. In alternate examples, the secondary group can comprise fins or pipes situated in the middle, around the periphery, or in any other predefined arrangement within the heat sink or exchanger.

Optionally, the one or more leading thermal transfer elements includes at least one row of thermal transfer elements at a leading side of the plurality of thermal transfer elements in the device, and wherein the one or more trailing thermal transfer elements includes at least one row of thermal transfer elements at a trailing side of the plurality of thermal transfer elements in the device.

The leading thermal transfer elements include a row of these elements situated at the forefront of the thermal transfer elements within the device. Conversely, the trailing thermal transfer elements encompass a row of elements located at the rear end of the thermal transfer elements in the device.

A row based arrangement may be provided in some examples. The leading thermal transfer elements may not just sporadically positioned at the device's front but may be systematically organized into at least one row, in some examples. Similarly, the trailing elements may be arranged in at least one row at the device's rear end. This row-based organization provides a structured and organized layout, ensuring that the fluid encounters a well-defined set of thermal transfer elements as it enters and exits the device.

The presence of these rows establishes clear entrance and exit points for the fluid flow. As the fluid enters the device, it first interacts with the row of leading elements, setting the tone for its flow dynamics and heat transfer. Similarly, as it prepares to exit, it lastly interacts with the row of trailing elements, ensuring that any final heat transfer opportunities are capitalized upon. This clear demarcation ensures that the fluid's interaction with the device starts and ends in a structured manner.

In some examples, the front fins or pipes may consist of a single row or multiple rows at the leading edge of the device, and the rear fins or pipes can include one or more rows at the trailing edge. In other examples, the leading or trailing group may span multiple rows or form a specific pattern within the device.

Optionally, the optimization framework is configured to further adjust at least one of: a pitch distance between the thermal transfer elements in a length direction, or a spacing between the thermal transfer elements in a direction perpendicular to their length direction.

The optimization framework can be equipped to further modify either the pitch distance between the thermal transfer elements in their length direction or the spacing between these elements in a direction perpendicular to their length. This ability to adjust inter-element distances offers the advantage of optimizing the spacing for fluid flow and/or heat transfer. By controlling the distances, the design ensures optimal flow rates and heat transfer efficiency across the entire device.

In some examples, the optimization framework may also modify the distance between the fins or pipes longitudinally, or the gap between them perpendicularly. In other variations, the tool can adjust other parameters like the angle between fins or pipes, their curvature, or their alignment in relation to the flow direction.

The method can be employed for 2D and/or 3D design optimization.

Optionally, a three-dimensional shape optimization is performed by using multiple lines for each thermal transfer element, each line located in planes in distanced from each other in the axial path of the respective thermal transfer element, to define the three-dimensional geometry of the thermal transfer element.

A unique three-dimensional shape optimization may be executed. This involves using multiple lines for each thermal transfer element, with each line placed in distinct planes spaced apart in the axial path of the respective element. This intricate method defines the three-dimensional geometry of the thermal transfer element.

In some examples, a three-dimensional shape optimization is executed using multiple lines for each thermal transfer element, each of these lines being located in separate planes along the axial path of the respective element, defining its three-dimensional geometry, in order to perform 3D optimization. As a result, a more intricate and tailored design is created for each element, ensuring that it is optimized for three-dimensional fluid dynamics and heat transfer. Multiple lines for each thermal transfer element can be used to define its shape using the respective nodes. Instead of a single line in a cross-sectional view (cf. 2D), multiple such lines are used, each situated in separate planes spaced out along the axial path of the element (cf. 3D). This approach can capture the element's geometry at different points along its length, providing a comprehensive representation of its three-dimensional shape.

By using these multiple lines in different planes, the claim offers a method to define and optimize the entire three-dimensional geometry of the thermal transfer element. This is not just about how the element looks in cross-section at a single point but how its shape evolves and changes along its entire length.

In this way, a more intricate and detailed design for each thermal transfer element is created. Three-dimensional optimization means that every curve, edge, and surface of the element can be crafted to achieve optimal performance. This granularity ensures that the element isn't just optimized for a two-dimensional slice but for its entire volume.

Fluids move in three dimensions, and their interactions with surfaces are not limited to just a flat plane. By adopting a 3D optimization approach, the design takes into account the complexities of three-dimensional fluid dynamics. This ensures that as the fluid envelops and flows around the thermal transfer element, every surface, curve, and edge of the element can be optimized for heat transfer. The result is a thermal transfer element that is tailored not just for a snapshot of its interaction with the fluid but for the entire dynamic process.

In some examples, a 3D shape optimization may be conducted using multiple curves for each fin or pipe, each curve situated in spaced planes along its length. These planes help determine the 3D geometry. In alternate examples, more than two curves or complex 3D contours can be employed for each fin or pipe.

Optionally, the cross sectional shape is allowed to vary along the axial path during optimization.

The cross-sectional shape is permitted to undergo variations along the axial path during the optimization, thereby introducing a dynamic design aspect where each section of the element can be uniquely tailored for specific flow conditions. This provides the ability to adapt the design to varying flow and heat transfer requirements along the element's axial path. Hence, in such examples, the cross-sectional shape of the thermal transfer element isn't static or uniform along its length. Instead, this shape is permitted to change, or vary, as one moves along the axial path of the element.

The allowance for cross-sectional variation introduces a significant degree of design versatility. As the fluid flows along the length of the thermal transfer element, it may encounter different flow conditions or challenges. By allowing the cross-sectional shape to change along the axial path, each section of the element can be specifically designed to handle these unique flow scenarios.

By granting the flexibility to change the cross-sectional shape along the axial path, the design ensures that the thermal transfer element remains adaptive. It can morph and adjust its geometry to cater to different flow velocities, pressure changes, or heat transfer rates. Traditional designs that maintain a uniform cross-sectional shape may not be equipped to handle the varying challenges presented along the length of the element. In contrast, a design that can vary its cross-section ensures that each segment of the element is optimized for its specific set of challenges. Whether it's a change in flow velocity, a shift in fluid density, or a localized heat transfer requirement, the adaptive design ensures that the element remains designed for optimal performance.

In some examples, the cross-sectional shape may be permitted to vary along its length during refinement. Alternatively, specific sections of the fin or pipe may remain constant while other sections undergo optimization.

Optionally, a length of the thermal transfer elements along its axial path is parameterized and allowed to be changed during optimization.

The length of the thermal transfer elements along their axial path is parameterized. This parameterization is critical as it allows the length to be modified during the optimization process.

Unlike static or fixed-length designs, the length of each thermal transfer element isn't predetermined or locked in but is instead a parameter that can be adjusted during the optimization process. This dynamic approach ensures that the elements aren't bound by initial design assumptions and can be tailored during the design phase. Different flow conditions and heat transfer requirements may necessitate thermal transfer elements of varying lengths. For instance, sections of the device with higher flow rates may benefit from longer elements that provide more extended interaction with the fluid, ensuring efficient heat transfer. Conversely, areas with slower flow may require shorter elements to avoid creating unnecessary resistance or pressure drops. The ability to modify the element's length ensures that each one is precisely tailored to its specific operational scenario.

By allowing the length of the thermal transfer elements to be a variable parameter, the design ensures that each element is of optimal length, neither too short (which may compromise heat transfer efficiency) nor too long (which may introduce flow resistance or inefficiencies). This adaptability ensures that each element is fine-tuned to the specific requirements of its position within the device, leading to an overall optimized design.

In some examples, the length of the fins or pipes may be described and permitted to change during refinement. In other examples, only the top, bottom, or middle sections of the fins or pipes may be allowed adjustments in length.

Optionally, at least 6 nodes are used, preferably at least 10 nodes, even more preferably at least 12 nodes.

In some examples, a minimum of 7 nodes is used for parameterization, with preferences for using 12 or even 15 nodes.

By using a higher number of nodes, the method achieves a more granular and precise control over the shape and distribution of the thermal transfer elements. The advantage is the ability to refine the design with greater detail, ensuring a highly optimized thermal transfer device.

The nodes play an important role in defining and refining the geometry of the thermal transfer elements. They serve as reference points or markers that help in determining the shape, thickness, and distribution of these elements. Essentially, they act as control points that influence the overall geometry. The increasing number of nodes is directly proportional to the granularity of control one can achieve over the design. With more nodes, there are more reference points to guide and refine the element's shape, leading to a more intricate design process.

The primary advantage stemming from this increase in node count is the heightened level of detail and precision in the design process. With more nodes, the curvature, thickness, and overall geometry of the thermal transfer elements can be defined with higher fidelity. Furthermore, potential inefficiencies or design challenges can be addressed with greater specificity, allowing for micro-adjustments that cater to very localized flow or heat transfer conditions. Also, the overall design becomes more adaptable and responsive to the unique requirements of the device, ensuring that each segment of the element is optimized for its specific operational scenario.

In some examples, a minimum of 6 nodes may be employed, but in some embodiments, 10 nodes, 12 nodes, or even more may be utilized. In other variations, the number of nodes may be tailored to the complexity of the design or optimization criteria.

In some examples, maximum 100 nodes are used, preferably maximum 80 nodes, even more preferably maximum 40 nodes, for the sake of computational efficiency. It has been found to have nodes in a range between 6-100, preferably 10-80, even more preferably 12-40 provides a good balance with regard to fidelity and computational costs.

Optionally, shape optimization is performed using a first-order optimization method utilizing gradients, and the gradients are calculated using the adjoint method.

The shape optimization is performed using a first-order optimization method that capitalizes on gradients. These gradients can be calculated employing the adjoint method, ensuring precision and efficiency.

This methodological approach offers the advantage of efficient and precise optimization. By utilizing the adjoint method for gradient calculations, the optimization process becomes more computationally efficient and accurate, ensuring an optimal design in less time.

First-order optimization methods utilize gradients, which represent the direction and rate of change of the objective function concerning the design parameters. In the context of thermal transfer devices, these gradients provide insights into how minor alterations in the design can impact the device's performance. By following these gradients, the optimization process can converge towards a design that maximizes (or minimizes) the desired performance metric.

While gradients are crucial for optimization, their computation can be computationally intensive, especially for complex systems. The adjoint method provides for a mathematical technique that offers a more efficient way to compute these gradients. Instead of directly computing the gradient for each design parameter (which can be numerous), the adjoint method calculates an "adjoint variable" from which all the required gradients can be derived. This significantly reduces the computational effort and time required, especially when dealing with a large number of design parameters.

This approach provides a significant advantage combined with the method according to the disclosure. A vast design space can be explored, and efficient optimization is enables using the adjoint method. The adjoint method is not just efficient but also accurate. By providing precise gradients, it ensures that the optimization process is guided accurately towards the desired design goals, reducing the likelihood of suboptimal solutions.

Optionally, the line is a central symmetry line passing through a respective thermal transfer element substantially along its length direction. The term "symmetry line" typically refers to a line of reflection or central axis about which two halves of a structure, such as a thermal transfer element, are mirror images of each other, implying that each half is symmetrical to the other along this line. In some cases a symmetric design may be desired.

However, in certain examples, a non-symmetrical configuration may be employed. The thermal transfer element may exhibit a non-symmetric profile or shape, such that the two halves divided by the symmetry line are not mirror images of each other. This non-symmetry might be introduced intentionally to cater to specific design objectives or operational requirements of the thermal transfer device.

In some examples, while a symmetry line may or may not pass through a thermal transfer element, the orientations or configurations of multiple thermal transfer elements in a device might differ, resulting in non-identical geometric profiles even if each element possesses its own symmetry line.

In some examples, the thermal transfer elements may have a non-parallel alignment. Such non-parallel alignments could be a result of unique design considerations or to achieve particular fluid dynamic or heat transfer outcomes.

The flexibility to have non-symmetric, non-identical, and non-parallel configurations allows for a broader range of design possibilities and operational efficiencies in the thermal transfer device.

According to an aspect, the invention provides for a computing system for designing a thermal transfer device, comprising: a processor; a non-transitory machine readable medium comprising code configured to direct the processor to perform the steps according to the disclosure.

The system present a profound advantage by offering an expansive design space for the heat transfer device. The optimization process is streamlined and efficient, facilitating the design of tailor-made heat exchangers in an adept manner.

According to an aspect, the invention provides for a non-transitory, computer readable medium comprising code configured to direct a processor to perform the steps of according to the disclosure.

It will be appreciated that in accordance with various examples, the term "structured way" can be understood to refer to an arrangement wherein the thermal transfer elements are organized in a specific manner to achieve a desired configuration, such as, for example, an array. In certain embodiments, the term "array" denotes a consistent or predefined order of the thermal transfer elements. This consistent or predefined order may be characterized by a pattern, sequence, or any other organized layout of the thermal transfer elements.

It is to be appreciated that while the structured way may suggest a consistent or uniform distribution, it does not necessarily imply uniformity across all regions of the arrangement. In certain embodiments, the distribution of the thermal transfer elements within the array may be non-uniform. This non-uniform distribution can manifest as variations in the spacing or distances between adjacent thermal transfer elements. Specifically, the distances between the thermal transfer elements can differ at distinct locations within the array. Such variations may be intentionally designed to cater to specific performance, flow dynamics, or heat transfer requirements of the thermal transfer device.

In some examples, the structured way may provide for strategic placement or positioning of the thermal transfer elements to optimize the thermal transfer efficiency, fluid dynamics, or other operational parameters of the device. The structured way, thus, provides flexibility in the design and configuration of the thermal transfer elements while maintaining an organized arrangement.

It will be appreciated that in accordance with various examples, the term "axial path" pertains to a predetermined trajectory or direction along which a thermal transfer element extends or is oriented. This axial path serves as a foundational reference for defining the geometric and spatial attributes of the thermal transfer element within the thermal transfer device.

It should be understood that in certain embodiments, the axial path of one thermal transfer element can be substantially similar or identical to the axial path of another thermal transfer element, implying a consistent or uniform orientation of multiple thermal transfer elements relative to a common reference point or plane. However, in other examples, the axial path of one thermal transfer element can deviate or differ from that of another thermal transfer element. Such variations in the axial paths may be introduced to achieve specific design objectives, optimize thermal transfer efficiency, or provide for unique fluid dynamic requirements. The variability in axial paths allows for enhanced customization and adaptability in the design and functioning of the thermal transfer device, offering a broader range of configurations.

Therefore, the concept of the "axial path", as disclosed herein, encompasses both scenarios where thermal transfer elements share a common axial path and where they exhibit distinct axial paths within the same thermal transfer device.

In some examples, within the context of computational simulations and modeling pertaining to thermal transfer devices, the spanwise direction typically refers to the direction perpendicular to the primary flow direction or the axial path of the tubes. In order to achieve efficient and accurate modeling, especially in scenarios where the tubes exhibit repetitive or cyclic patterns in the spanwise direction, in some examples, periodic boundary conditions may be employed. The term "periodic boundary conditions" denotes a set of mathematical and computational conditions wherein the properties, behaviors, and values at one boundary of the computational domain are set to be identical or congruent to those at the opposing boundary. This approach essentially creates a seamless and continuous modeling environment, eliminating abrupt or artificial boundaries that may otherwise interfere with the accuracy of the simulation.

By employing periodic boundary conditions in the spanwise direction, it becomes feasible to model a representative segment or portion of the tube array, rather than the entirety of it. The modeled segment can be considered as a repeating unit cell that mirrors the behavior and characteristics of the entire tube arrangement in the spanwise direction. This methodology offers computational efficiency, as it reduces the overall complexity and size of the simulation domain while still capturing the essential dynamics and interactions occurring throughout the entire spanwise extent of the tubes.

Hence, the approach of using periodic boundary conditions in the spanwise direction facilitates a streamlined and efficient computational modeling process, ensuring accurate representation of the tubes' behavior and interactions in thermal transfer devices.

According to an aspect, the invention provides for a method for configuring and assessing a thermal transfer device with multiple elements, where each element follows an axial path. The process begins with an initial design of these elements. Using an optimization system and a computational model, it simulates fluid dynamics and heat transfer around the elements. This system iteratively refines each element's design based on set criteria, allowing independent design variations of multiple elements during optimization.

It will be appreciated that while certain thermal transfer elements within the thermal transfer device may be oriented or extend in a particular direction, there is no imperative requirement for all thermal transfer elements to adhere to a singular, unified direction of extension. Specifically, the design and configuration of the thermal transfer device permit a diversity of orientations among its constituent thermal transfer elements.

In certain embodiments, different thermal transfer elements can be oriented or extend in disparate directions, either to accommodate specific design constraints, optimize heat transfer characteristics, address fluid dynamic considerations, or achieve other operational objectives. This flexibility in directional orientation allows for a tailored arrangement of thermal transfer elements within the device, catering to specific performance requirements or design criteria.

Therefore, the present invention contemplates a thermal transfer device wherein the thermal transfer elements can exhibit a variety of directional extensions, without being restricted to a common or singular direction across all elements. Such a design approach enhances the adaptability and versatility of the thermal transfer device in diverse applications and/or operating conditions.

It will be appreciated that any of the aspects, features and options described in view of the computer-implemented method apply equally to the computing system and the described non-transitory computer readable medium. It will also be clear that any one or more of the above aspects, features and options can be combined.

BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:

Fig. 1a, 1b show a schematic diagram of an exemplary shape design;
Fig. 2 shows a schematic diagram of an exemplary optimization methodology; and
Fig. 3a, 3b, 3c show a schematic diagram of exemplary analysis results.

DETAILED DESCRIPTION

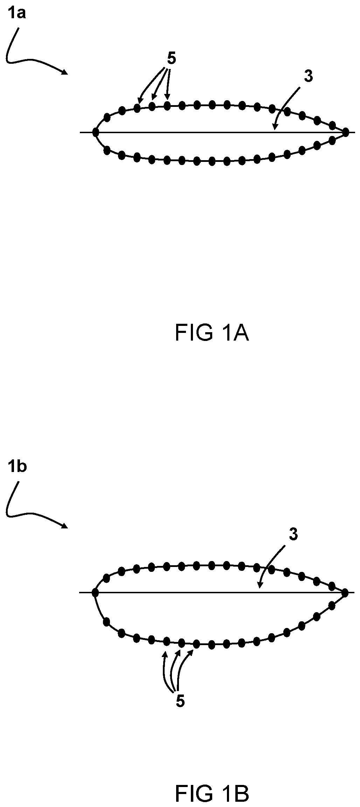

Fig. 1a, 1b show a schematic diagram of an exemplary shape design of thermal transfer elements 1a, 1b. The design can be adjusted during the optimization process. A computer-implemented method is employed for systematic configuration, assessment and optimization of a thermal transfer device comprising a plurality of thermal transfer elements arranged in a structured way, wherein each thermal transfer element extends along an axial path. The method includes the steps of: starting with an initial geometric design of the plurality of thermal transfer elements; using an optimization framework with a computational model for performing computerized simulations of fluid dynamics and heat transfer at least around said thermal transfer elements during intended operation of the thermal transfer device, in order to perform geometric design optimization of each thermal transfer element based on an optimization algorithm targeting predetermined criteria, wherein the optimization framework is configured to iteratively refine the geometric design of each individual thermal transfer element; and wherein the geometric design of multiple thermal transfer elements are allowed to be varied independently of each other during optimization.

In the shown example, each thermal heat transfer element 1a, 1b is parameterized along a line 3 in a cross-sectional view perpendicular to its axial path, wherein, during iterative optimization, the optimization framework is configured to adjust a thickness distribution of each heat transfer element along said line 3 to derive an overall shape of each thermal transfer element 1a, 1b, and wherein a plurality of nodes 5 are defined along a length of each thermal transfer element 1a, 1b, and wherein the thickness distribution of the thermal transfer element is determined by a distance from each of these plurality of nodes 5 to the line 3 of said respective thermal transfer element 1a, 1b.

The line may be chosen to be substantially parallel to a general flow direction between an inlet and outlet of the thermal transfer device in between which the plurality of thermal transfer elements are arranged.

The computer-implemented method may provide for an improved optimization approach for the design of a thermal transfer device, specifically focusing on the geometric optimization of each thermal transfer element. Each thermal transfer element, can be parametrized around the line 3, wherein the thickness distribution around this central line leads to the overall shape of the element. By adjusting the thickness distribution, the shape of each tube can be optimized independently.

For each element, a plurality of nodes 5 used, offering a comprehensive design space for the thermal transfer device. This approach leads to improved optimization efficiency whilst covering a rich design space.

The invention employs shape optimization rather than topology optimization. This approach is more efficient. Since defined surfaces are used and a wall modeled flow is employed, it's possible to model viscosity and turbulence more accurately.

The optimization framework may for example employ a first-order optimization method using gradients. Instead of traditional methods that are computationally intensive, the adjoint method can be used to calculate gradients for all sensitivities simultaneously, dramatically accelerating the optimization process.

The method may provide for a CAD-based parameterization, offering precise geometric control and allowing constraints and bounds to be set on design parameters effectively. The optimized design can significantly reduce the pressure drop and/or improve the fluid-dynamic performance while constraining heat transfer, resulting in a more efficient thermal transfer device.

In some examples, the method is configured to avoid complete re-meshing. For this purpose, in some examples, post each optimization step, mesh elements can be deformed based on the shape modification, ensuring computational efficiency.

The optimization framework of the invention may begin with an initial geometric design of the thermal transfer elements. An optimization algorithm is employed to refine the design iteratively. Each thermal transfer element's design is allowed to vary independently during the optimization process. The line 3 may be directed along the general flow direction in some examples. In some examples, the initial design of the elements is a teardrop shape. In some examples, the thermal transfer elements represent tubes or fins in the thermal transfer device.

The distance from the baseline 3 determines the shape of the thermal transfer element. By using multiple thickness lines (cf. nodes) on each side of the thermal transfer element, a rich design space is ensured, whilst maintaining an efficient optimization process.

The method can handle both geometric parameters and flow conditions, such as flow rate. This dual consideration ensures that the optimized shape directly influences the flow dynamics.

In some examples, the thermal transfer elements are tubes in a tubular heat exchanger, wherein the tubes are hollow, and fluid flows through them for heat exchange. However, it is also possible that the tubes integrate resistors for resistive heating. In some examples, the thermal transfer elements have a constant heat flux, especially relevant when designing a heat sink. In a 3D perspective, the design of the thermal transfer elements can consider different boundary conditions based on the heat transfer mechanism.

The method provides for a methodology where the geometric parameters of each tube are (entirely) independent of each other, a stark deviation from existing methods where all tubes typically share the same design. By integrating advanced optimization techniques and providing a rich design space, the invention ensures efficient and effective heat exchanger designs.

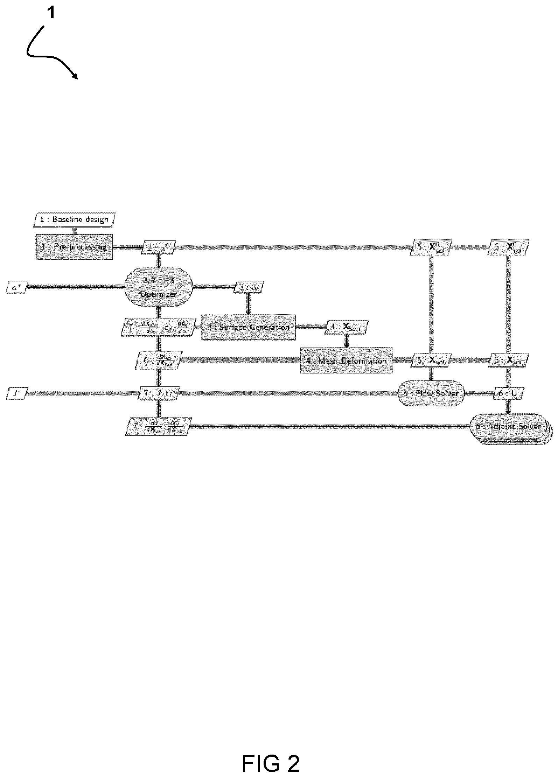

Fig. 2 shows a schematic diagram of an exemplary optimization methodology utilizing a CAD-based parametrization for concurrent shape optimization of heat transfer surfaces using the adjoint method for gradient-based optimization. A gradient-based optimizer leads to a faster convergence for many design variables, while the adjoint method reduces the computational cost of computing gradients for a large number of design variables. Employing a CAD-based parametrization in shape optimization provides enhanced control over the design surface, facilitating the imposition of geometric constraints. Consequently, the method can improve the performance of heat transfer surfaces. The optimization framework may utilize CFD simulations, adjoint computations and mesh deformation.

The exemplary optimization framework is illustrated in fig. 2. The main components of the optimization framework are:

1. Pre-processing: Input the mesh of the baseline design into the CAD-parametrization tool to obtain the initial design vector $(a^0)$ that contains the parametric representation of all the design surfaces in the baseline geometry.
2. Optimizer: Start the optimization loop using the initial design vector.
3. Surface Generation: Generate the coordinates of the design surfaces $(X_{surf})$, compute CAD sensitivities $(dX_{surf} / d\alpha)$, and evaluate geometric constraints $(c_g)$, for example, perimeter, internal area etc. and their sensitivities $(dc_g / d\alpha)$.
4. Mesh Deformation: Deform the mesh using the coordinates of the design surfaces to obtain the mesh output $(X_{vol})$.
5. Flow Solver: Perform CFD computations and evaluate the objective function (J) and flow-related constraints $(cf)$.
6. Adjoint Solver: Perform adjoint computations to calculate the sensitivities of cost functions with respect to mesh coordinates $(dJ / dX_{vol}, dc_f / dX_{vol})$.
7. Optimizer: With the gradients evaluated from the overall process, continue the optimization loop until the convergence criteria are reached.

The optimization framework may be configured to accommodate multiple optimizers to obtain the optimum designs of heat transfer geometries. In some examples, one or more gradient-based optimizers are used. The gradient values can be obtained from the dot product of the node sensitivities, i.e. the sensitivity of the objective function with respect to surface node coordinates, and the CAD sensitivities, i.e. the sensitivity of the node coordinates with respect to design variables, as shown in the following equation:

$$\frac{\partial J}{\partial \alpha} = \frac{\partial J}{\partial X_{vol}} \cdot \frac{\partial X_{vol}}{\partial X_{surf}} \cdot \frac{\partial X_{surf}}{\partial \alpha}$$

The CAD sensitivities can be obtained with the surface generation. The node sensitivities can be computed using the output of the mesh deformation and the adjoint solver.

The heat transfer design surfaces may be parametrized using a generative/constructive method of characterizing geometries for example using Non-Uniform Rational B-Splines (NURBS) curves. Each heat transfer design surface may be parametrized using the camber-thickness approach, i.e. with a camber line and two thickness distributions (upper and lower) around the camber line. The entire parametrized surface can be chosen to be $G^2$ continuous.

The output of the Surface Generation may be:

- surface node coordinates $(Xsurf)$
- CAD sensitivities $(dXsurf / da)$ i.e the sensitivity of the node coordinates with respect to the design variables
- Geometric constraint $(c_g)$ values
- Sensitivities of the geometric constraints (dcg / du)

CAD sensitivities and the sensitivities of the geometric constraints may be calculated with machine accuracy using the complex-step method. Xsurf can then be fed into the Mesh Deformation component to obtain a corresponding mesh.

In an exemplary optimization framework, the volume deformation component may use the linear elasticity mesh deformation method. It is based on the linear elasticity equations in which the surface deformation is imposed as a Dirichlet condition. The deformations can be performed and the mesh (Xvol) to perform the flow simulation can be output. This volume deformation method offers an integrated, robust and flexible approach to obtaining new meshes for different surface geometries. It is computationally more efficient than re-meshing. However, for large deformations, the mesh quality may be compromised. Various other mesh deformation techniques may be used.

The performance of the heat transfer surfaces can be evaluated using a flow solver that simulates a steady-state, incompressible, turbulent flow using the finite volume method. In some examples, a flux-difference-splitting (FDS) method is used to discretize the convective fluxes. MUSCL (Monotone Upstream-Centered Schemes for Conservation Laws) approach is used to achieve second-order accuracy. The Green-Gauss theorem may be used to compute the spatial gradients of flow variables. For turbulence modelling, for example the Spalart-Allmaras turbulence model may be used due to its benefits of a lower computational cost for reasonable accuracy. A first-order scalar upwind method may be used to model the turbulent variables' convection. A steady-state solution may be achieved using a pseudo-transient approach with Euler implicit time integration. The linearized governing equations can be solved using the flexible generalized minimum residual (FGMRES) method with an incomplete LU preconditioner. Flow state ($U$) is used to compute the objective function ($J$) and the flow-related constraint values($c_f$).

In some examples, an adjoint solver is employed. The adjoint solver forms an important part of this optimization framework as it enables efficient computation of the gradients. The algorithmic differentiation (AD)-based discrete adjoint solver can be configured to solve the adjoint equations. The discretization schemes for the adjoint solver can be the same as that for the flow solver. Using the adjoint state, the sensitivity of the objective function with respect to the volumetric coordinates $dJ / dX_{vol}$ is computed. Furthermore, the surface node sensitivities i.e. the sensitivity of the objective function with respect to surface node coordinates can be computed ($\partial J / \partial X_{vol} . \partial X_{vol} / \partial X_{surf}$)

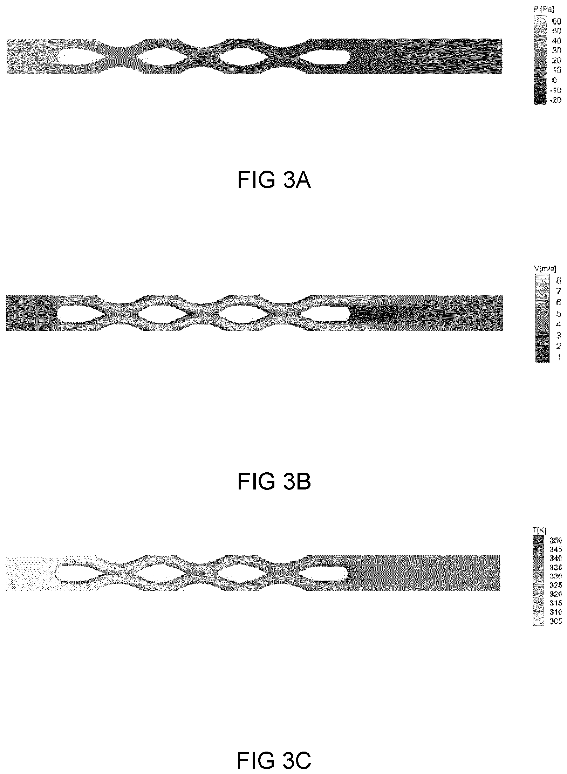

Fig. 3a, 3b, 3c show a schematic diagram of exemplary analysis results of a case study of a tubular heat exchanger.

A bare-tube air-to-fluid heat exchanger is chosen for the case study to demonstrate the potential of the optimization framework in improving the performance of heat transfer equipment. The chosen reference geometry consists of a staggered tube arrangement that was designed as the proof-of-concept to deliver a similar heat transfer load as mini/micro-channel heat exchangers, but with a lower airside pressure drop. The geometry consisting of a staggered arrangement of 7 stream-wise tubes was chosen as the baseline geometry of the tubular heat exchanger in this case study.

Since the case study focuses on improving the air-side flow and heat transfer performance, the computational domain for the flow simulations is reduced to only the air-side with the tubes modelled as isothermal walls. The inlet is situated at a distance of 1 wt (width length) from the leading edge of the first tube, while the outlet is 3wt away from the trailing edge of the last tube. These upstream and downstream computational domain distances were determined based on a sensitivity analysis conducted to minimize the domain size without compromising the accuracy of the results. The selected flow condition for this case study corresponds to an air volume flow rate of 0.03 m³/s. The inlet was prescribed with a velocity of 3m/s at a temperature of 300K. The freestream turbulence intensity at the inlet was 5%, and the turbulent to laminar viscosity ratio was 10. The outlet was imposed with a pressure outlet boundary condition with a value of 0 Pa. The top and the bottom boundaries were set as periodic boundaries. For the tube walls, a constant temperature no-slip boundary condition is applied with a temperature value of 350K. With the characteristic length of tube width, the Reynolds number is 530, and the turbulence effects are more prominent downstream of the domain. The fluid properties were assumed to be constant.

| Density $\rho$ | | 1.1275 kg/m³ |
| Specific Heat | $C_p$ | 1006.9 J/(kg · K) |
| Viscosity | $\mu$ | $1.9148 \times 10^{-5}$ Pa·s |
| Thermal Conductivity $k$ | | 0.027076 W/(m ·K) |

A CFL number of 10 was selected for the optimization study to ensure the stability of the flow solution. The flow simulations were performed with convergence criteria of 5 orders of
In this case study, the goal is to minimize the pressure drop across the heat exchanger while maintaining a minimum required heat transfer rate.

The objective of the optimization problem is to minimize the airside pressure drop $_{(\Delta Pair)}$ across the heat exchanger, which is indicative of the pumping losses for the heat exchanger application. The pressure drop is evaluated using the output of the flow solver, while the sensitivities are computed using the output of the adjoint solver.

The design variables are the upper and lower thickness distribution parameters in the camber thickness method. The initial values of these design variables are calculated by performing surface matching of the baseline design to obtain its suitable parametric representation. Bounds are imposed on the design variables to ensure that the optimized tube shapes are physically meaningful and to avoid self-intersecting tubes and tube surfaces intersecting with one another.

The optimization problem includes constraints on the flow and geometric properties of the tubular heat exchanger. The flow constraint is imposed on the heat transfer rate in the heat exchanger, represented by the temperature difference between the fluid outlet and inlet. This constraint ensures that the heat exchanger's thermal performance is maintained at a desired level. The temperature difference is obtained from the output of the flow solver, and its sensitivity is computed using the output from the adjoint computations.

The geometric constraint is imposed on the area enclosed within each tube (a) to ensure that the pressure drop for the fluid flow within the tubes (which is not modelled in the CFD simulations) does not become excessively high so that it does not adversely affect the overall performance of the heat exchanger. To compute the area enclosed by each tube, the shoelace method is employed. The shoelace method, also known as the Gauss area formula, is a simple and effective technique for calculating the area of any non-intersecting polygon when the coordinates of its vertices are known.

The adjoint method allows for a computationally efficient way of computing the gradients, as only one adjoint computation is needed per cost function to compute its gradient values with respect to all the design variables. On the other hand, gradient computations with the finite difference method are computationally more expensive as the associated computational cost scales with the number of design variables.

Fig. 3 shows optimized non-identical tube geometry. For the optimum non-identical tube geometry, a gradual forward tilt near the leading edge is observed for all tubes except for the first (tube 1) and the last one (tube 4) in the streamwise direction. Notably, the profiles of all tubes, barring tube 1 and tube 4, resemble those in the case of the optimum identical tube geometry, with some differences. This difference is evident near the leading edge, where a flatter region near the rounded leading edge followed by a steeper rise can be observed as compared to the identical case geometry. This is attributable to the different incident flow profile on the central tubes due to the varied trailing edge shape of tube 1.

Further examination reveals that the leading edge of tube 1 is more rounded, potentially contributing to a larger form drag. However, the shape of the rest of the tube after the curvature of the leading edge ensures a smooth flow path to reduce flow separation. With the flow paths being broader compared to the identical tube geometry and the lack of repeated contractions and expansions of the flow path, as seen in the baseline, the pressure drop is lower in this case. This is particularly noticeable near tube 4. For tube 4, a flatter leading edge and a more rounded trailing edge are observed, leading to a mirrored effect compared to tube 1. With its gradual tilt, this shape ensures a broader flow path compared to the other two cases and minimizes the flow separation compared to the baseline. Fig. 3b, showcasing the velocity contours, provides a more detailed picture of the flow effects. A significantly lower maximum velocity magnitude is observed for the non-identical tubes case when compared to the baseline throughout the internal flow paths. This difference becomes clearer near tube 4 when compared to the identical tubes. Since the geometry tilt is more gradual, the maximum velocity is lower, reducing pressure losses due to the reduced need for flow acceleration and deceleration. Fig. 3a presents the corresponding pressure contour. The temperature contours in Fig. 3c indicate a similar trend across the different geometries, demonstrating that even with a substantially lower drop, the heat transfer rate remains consistent.

In this example, the adjoint-based shape optimization method is combined with a CAD-based parametrization for concurrently optimizing multiple heat transfer surfaces. CAD-based parametrization facilitates complete control over the design surface, enabling better imposition of functional and manufacturing-related geometric constraints. The adjoint method efficiently computes the gradients of the objective function with respect to the design variables parametrizing multiple heat transfer surfaces. However, other approaches may also be used.

In the results of fig. 3a-3c, the optimization framework was applied to a case study for optimizing bare-tube heat exchangers. The objective was to minimize the pressure drop across tubular heat exchangers with non-round tubes while maintaining the heat transfer rate. In summary, using a gradient-based optimization for leads to a fast optimization convergence. Optimum designs were obtained with 12 and 20 design iterations for the case with identical and non-identical tubes, respectively. Furthermore, optimizing the tubes concurrently, taking into account the local flow and heat transfer effects for each tube, leads to a higher performance improvement. With optimum identical tubes, the performance improvement was 19.41%, while with optimum non-identical tubes, the pressure drop was 25.05% lower than a baseline design.

It will be appreciated that in some examples, the term "computerized simulations of fluid dynamics" refers to computational methodologies and processes employed to model, analyze, and predict the behavior of fluids within or around specific structures, such as thermal transfer elements, in a computer/virtual environment.

It is to be understood that these computerized simulations encompass a range of fluid-related simulations. For instance, in certain embodiments, "flow simulations" are utilized to model and analyze the movement or propagation of fluid through or around the thermal transfer elements, taking into account factors such as fluid viscosity, turbulence, and boundary conditions.

In addition, "flow rate simulations" can be employed to predict and assess the volume or mass of fluid passing through a given section of the thermal transfer device per unit of time. Such simulations can provide insights into the efficiency and effectiveness of fluid flow within the system.

Furthermore, "flow direction simulations" are designed to model and determine the primary trajectory or orientation of fluid movement in relation to the thermal transfer elements and other components of the thermal transfer device. This can aid in understanding the impact of design variations on fluid dynamics and optimizing the orientation and configuration of the thermal transfer elements.

Collectively, these computerized simulations of fluid dynamics serve to provide a comprehensive understanding of fluid behavior in the context of the thermal transfer device. By leveraging these simulations, design parameters can be iteratively refined and optimized to achieve desired performance outcomes and ensure efficient operation of the thermal transfer device.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

**Claims**

1. A computer-implemented method for systematic configuration, assessment and optimization of a thermal transfer device comprising a plurality of thermal transfer elements arranged in a structured way, wherein each thermal transfer element extends along an axial path, the method including the steps of: starting with an initial geometric design of the plurality of thermal transfer elements;

   using an optimization framework with a computational model for performing computerized simulations of fluid dynamics and heat transfer at least around said thermal transfer elements during intended operation of the thermal transfer device, in order to perform geometric design optimization of each thermal transfer element based on an optimization algorithm targeting predetermined criteria, wherein the optimization framework is configured to iteratively refine the geometric design of each individual thermal transfer element; and
   wherein the geometric design of multiple thermal transfer elements are allowed to be varied independently of each other during optimization.

2. The method according to claim 1, wherein each thermal heat transfer element is parameterized along a line in a cross-sectional view perpendicular to its axial path, wherein, during iterative optimization, the optimization framework is configured to adjust a thickness distribution of each heat transfer element along said line to derive an overall shape of each thermal transfer element, and wherein a plurality of nodes are defined along a length of each thermal transfer element, and wherein the thickness distribution of the thermal transfer element is determined by a distance from each of these plurality of nodes to the line of said respective thermal transfer element.

3. The method according to claim 2, wherein the line is chosen to be substantially parallel to a general flow direction between an inlet and outlet of the thermal transfer device in between which the plurality of thermal transfer elements are arranged.

4. The method according to any one of the preceding claims, wherein the initial geometric design in cross-section has a droplet shape.

5. The method according to any one of the preceding claims, wherein a first subset of the thermal transfer elements, including at least one or more leading thermal transfer elements and one or more trailing thermal transfer elements arranged within the device, is selected, wherein, during optimization, the thermal transfer elements in the first subset are allowed to independently exhibit a distinct geometric design, and wherein a second subset of the thermal transfer elements is selected, wherein, during optimization, the thermal transfer elements in the second subset are constrained such that they are not allowed to change independently in their geometric design.

6. The method according to claim 5, wherein the second set includes thermal transfer elements positioned between one or more leading thermal transfer elements and one or more trailing thermal transfer elements in the thermal transfer device.

7. The method according to claim 5 or 6, wherein the one or more leading thermal transfer elements includes at least one row of thermal transfer elements at a leading side of the plurality of thermal transfer elements in the device, and wherein the one or more trailing thermal transfer elements includes at least one row of thermal transfer elements at a trailing side of the plurality of thermal transfer elements in the device.

8. The method according to any one of the preceding claims, wherein the optimization framework is configured to further adjust at least one of: a pitch distance between the thermal transfer elements in a length direction, or a spacing between the thermal transfer elements in a direction perpendicular to their length direction.

9. The method according to any one of the preceding claims, wherein a three-dimensional shape optimization is performed by using multiple lines for each thermal transfer element, each line located in planes in distanced from each other in the axial path of the respective thermal transfer element, to define the three-dimensional geometry of the thermal transfer element.

10. The method according to claim 9, wherein the cross sectional shape is allowed to vary along the axial path during optimization.

11. The method according to any one of the preceding claims, wherein a length of the thermal transfer elements along its axial path is parameterized and allowed to be changed during optimization.

12. The method according to any one of the preceding claims 2-11, wherein at least 6 nodes are used, preferably at least 10 nodes, even more preferably at least 12 nodes.

13. The method according to any one of the preceding claims, wherein shape optimization is performed using a first-order optimization method utilizing gradients, and the gradients are calculated using the adjoint method.

14. A computing system for designing a thermal transfer device, comprising:

> a processor;
> a non-transitory machine readable medium comprising code configured to direct the processor to perform the steps of any of the preceding claims 1-13.

15. A non-transitory, computer readable medium comprising code configured to direct a processor to perform the steps of any one of the preceding claims 1-13.

**1a**

5

3

## FIG 1A

**1b**

3

5

## FIG 1B

**1**

FIG 2

FIG 3A

FIG 3B

FIG 3C

Europäisches
Patentamt

European
Patent Office

Office européen
des brevets

## EUROPEAN SEARCH REPORT

**Application Number**

EP 23 21 6402

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANIBAL JOSHUA L ET AL: "Aerodynamic shape optimization of an electric aircraft motor surface heat exchanger with conjugate heat transfer constraint", INTERNATIONAL JOURNAL OF HEAT AND MASS TRANSFER, ELSEVIER, AMSTERDAM, NL, vol. 189, 25 February 2022 (2022-02-25), XP086996565, ISSN: 0017-9310, DOI: 10.1016/J.IJHEATMASSTRANSFER.2022.122689 [retrieved on 2022-02-25] * abstract * * figures 2-4, 6, 7, 9, 11-15, 17 * * section 1.4, par. 1, 2 section 2.1, par. 1 section 2.2, par. 1 section 2.3, par. 1 section 2.4, par. 1 section 2.7, par. 1 section 2.7.1, par. 1-4 section 2.7.3, par. 1 section 3.2, par. 1, last paragraph * * the whole document * ----- -/-- | 1-15 | INV. G06F30/17 G06F30/28 ADD. G06F111/04 G06F111/10 G06F113/08 G06F119/08 |

**TECHNICAL FIELDS SEARCHED (IPC)**

G06F

The present search report has been drawn up for all claims

| Place of search | Date of completion of the search | Examiner |
|---|---|---|
| Munich | 24 May 2024 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

Europäisches Patentamt

European Patent Office

Office européen des brevets

**EUROPEAN SEARCH REPORT**

**Application Number**

EP 23 21 6402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHÁVEZ-MODENA MIGUEL ET AL: "Numerical optimization of the fin shape experiments of a heat conjugate problem surface air/oil heat exchanger (SACOC)", INTERNATIONAL JOURNAL OF HEAT AND MASS TRANSFER, ELSEVIER, AMSTERDAM, NL, vol. 182, 24 September 2021 (2021-09-24), XP086861327, ISSN: 0017-9310, DOI: 10.1016/J.IJHEATMASSTRANSFER.2021.121971 [retrieved on 2021-09-24] * abstract * * figures 1, 5, 6, 19, 21, 26 * * pg. 5, col.1, par. 4, 5 section 3.2 section 4.3, 4.4 * * the whole document * ----- | 1-15 | |
| X | ZHANG RUOCHUN ET AL: "Parameter-free Shape Optimization of Heat Sinks", 2020 19TH IEEE INTERSOCIETY CONFERENCE ON THERMAL AND THERMOMECHANICAL PHENOMENA IN ELECTRONIC SYSTEMS (ITHERM), IEEE, 21 July 2020 (2020-07-21), pages 756-765, XP033825374, DOI: 10.1109/ITHERM45881.2020.9190501 [retrieved on 2020-09-09] * abstract; figures 3b, 3d, 4, 6, 7 * * the whole document * ----- | 1-15 | **TECHNICAL FIELDS SEARCHED (IPC)** |

-/--

The present search report has been drawn up for all claims

| Place of search | Date of completion of the search | Examiner |
|---|---|---|
| Munich | 24 May 2024 | Brandiska, Pavlina |

Europäisches
Patentamt

European
Patent Office

Office européen
des brevets

# EUROPEAN SEARCH REPORT

**Application Number**

EP 23 21 6402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANG HEESEUNG ET AL: "Numerical investigation and design optimization of a novel polymer heat exchanger with ogive sinusoidal wavy tube", INTERNATIONAL JOURNAL OF HEAT AND MASS TRANSFER, ELSEVIER, AMSTERDAM, NL, vol. 166, 13 December 2020 (2020-12-13), XP086496441, ISSN: 0017-9310, DOI: 10.1016/J.IJHEATMASSTRANSFER.2020.120785 [retrieved on 2020-12-13] * abstract; figures 3, 4, 7, 17, 18; tables 1, 6, 8, 12 * * the whole document * | 1-15 | |
| X | TANCABEL JAMES ET AL: "Multi-scale and multi-physics analysis, design optimization, and experimental validation of heat exchangers utilizing high performance, non-round tubes", APPLIED THERMAL ENGINEERING, PERGAMON, OXFORD, GB, vol. 216, 8 July 2022 (2022-07-08), XP087168090, ISSN: 1359-4311, DOI: 10.1016/J.APPLTHERMALENG.2022.118965 [retrieved on 2022-07-08] * abstract * * section 2.1, 2.2, 2.3; the whole document * | 1-15 | TECHNICAL FIELDS SEARCHED (IPC) |

The present search report has been drawn up for all claims

| Place of search | Date of completion of the search | Examiner |
|---|---|---|
| Munich | 24 May 2024 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)